(19) **Europäisches Patentamt / European Patent Office / Office européen des brevets**

(11) **EP 4 645 196 A1**

(12) **EUROPEAN PATENT APPLICATION**
published in accordance with Art. 153(4) EPC

(43) Date of publication:
05.11.2025 Bulletin 2025/45

(21) Application number: 23910188.4

(22) Date of filing: 14.12.2023

(51) International Patent Classification (IPC):
*G06Q 40/04* (2012.01)   *G06F 21/64* (2013.01)
*G06F 21/62* (2013.01)   *G06Q 20/38* (2012.01)

(52) Cooperative Patent Classification (CPC):
G06F 21/62; G06F 21/64; G06Q 20/36;
G06Q 20/38; G06Q 20/40; G06Q 40/04

(86) International application number:
PCT/CN2023/138877

(87) International publication number:
WO 2024/140258 (04.07.2024 Gazette 2024/27)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.12.2022 CN 202211701349

(71) Applicant: **Digital Currency Institute, The People's Bank of China**
**Beijing 100071 (CN)**

(72) Inventors:
• **MU, Changchun**
  **Beijing 100071 (CN)**
• **DI, Gang**
  **Beijing 100071 (CN)**

• **LYU, Yuan**
  **Beijing 100071 (CN)**
• **QIAN, Youcai**
  **Beijing 100071 (CN)**
• **GAO, Yang**
  **Beijing 100071 (CN)**
• **LV, Pumeng**
  **Beijing 100071 (CN)**
• **HE, Mengwei**
  **Beijing 100071 (CN)**
• **ZHAO, Ruiqi**
  **Beijing 100071 (CN)**

(74) Representative: **Piticco, Lorena**
**Isler & Pedrazzini AG**
**Giesshübelstrasse 45**
**Postfach 1772**
**8027 Zürich (CH)**

(54) **BLOCKCHAIN-BASED TRANSACTION SUPERVISION METHOD, SYSTEM AND APPARATUS, AND ELECTRONIC DEVICE**

(57) A blockchain-based transaction supervision method, relating to the technical field of blockchains. The method comprises: a payer client node acquires transaction plaintext information and transaction ciphertext information, and obtains and sends transaction supervision ciphertext information; an associated supervisor node decrypts the transaction supervision ciphertext information to obtain information to be supervised, obtains and sends signature ciphertext information when transaction plaintext information in the information to be supervised is correct and complete, and records the transaction as a first state; the payer client node sends the signature ciphertext information and zero-knowledge proof to a blockchain; when the zero-knowledge proof is established, a blockchain verification node stores the signature ciphertext information to the blockchain; and when detecting that the signature ciphertext information has been stored on the blockchain, the associated supervisor node modifies the transaction to a second state.

**(Cont. next page)**

EP 4 645 196 A1

a payer client node obtains transaction plaintext of a transaction and constructs transaction ciphertext based on the transaction plaintext — 201

the payer client node encrypts to-be-supervised information based on one or more supervision public keys respectively corresponding to the one or more associated supervision nodes respectively to obtain one or more pieces of transaction-supervision ciphertext, and the payer client node sends the one or more pieces of transaction-supervision ciphertext to the one or more associated supervision nodes respectively via a predetermined communication channel — 202

each associated supervision node of the one or more associated supervision nodes obtains a corresponding piece of transaction-supervision ciphertext, decrypts the corresponding piece of transaction-supervision ciphertext based on a supervision private key to obtain the to-be-supervised information, and in a case that the transaction plaintext is correct and complete, signs the transaction ciphertext based on the supervision private key to obtain a piece of signed ciphertext, determines a transaction state of the transaction plaintext as a first state, and sends the piece of signed ciphertext to the payer client node via the predetermined communication channel — 203

in a case that one or more pieces of signed ciphertext respectively sent by the one or more associated supervision nodes are received, the payer client node sends the one or more pieces of signed ciphertext and a zero-knowledge proof to the blockchain — 204

the blockchain verification node stores the one or more pieces of signed ciphertext on the blockchain, in a case that the zero-knowledge proof is valid — 205

each associated supervision node of the one or more associated supervision nodes changes the transaction state of the transaction plaintext to a second state in a case that a corresponding piece of signed ciphertext is detected to have been stored in the blockchain — 206

**FIG. 2**

**Description**

The present application claims the priority to Chinese Patent Application No.202211701349.9, filed on December 28, 2022, which is incorporated herein by reference in its entirety.

**FIELD**

The present disclosure relates to the technical field of blockchain, and in particularly to a transaction supervision method, system, and apparatus based on a blockchain, and an electronic device.

**BACKGROUND**

The blockchain is a chain-like storage structure composed of multiple blocks. Each of the blocks stores a certain amount of information. The multiple blocks are connected in a chronological order of their generation to form a chain. Transaction information is recorded on the blocks in a ciphertext form, including a payer of a transaction, a payee of the transaction, a type of digital currency, a transaction amount, and a supervision party. The supervision party includes a supervision party supervising the payee, a supervision party supervising the payer, and a supervision party supervising the digital currency, responsible for verifying the compliance and legality of the transaction information.

During a process of supervising the transaction information, the supervision party should pay attention to the privacy of the transaction information. The transaction information should not be disclosed to other users on the blockchain who are not involved in the transaction information, and should not be disclosed to supervision parties unrelated to the transaction information.

**SUMMARY**

In one aspect, a transaction supervision method based on a blockchain is provided according to some embodiments of the present disclosure, and the transaction supervision method includes: obtaining, by a payer client node, transaction plaintext of a transaction and constructing transaction ciphertext based on the transaction plaintext, where the transaction involves one or more associated supervision nodes; by the payer client node, encrypting to-be-supervised information respectively based on one or more supervision public keys respectively corresponding to the one or more associated supervision nodes to obtain one or more pieces of transaction-supervision ciphertext, and sending the one or more pieces of transaction-supervision ciphertext to the one or more associated supervision nodes respectively via a predetermined communication channel, where the to-be-supervised information includes the transaction ciphertext and the transaction plaintext; by each associated supervision node of the one or more associated supervision nodes, obtaining a corresponding piece of transaction-supervision ciphertext, decrypting the corresponding piece of transaction-supervision ciphertext based on a supervision private key to obtain the to-be-supervised information, and in a case that the transaction plaintext is correct and complete, signing the transaction ciphertext based on the supervision private key to obtain a piece of signed ciphertext, determining a transaction state of the transaction plaintext as a first state, and sending the piece of signed ciphertext to the payer client node via the predetermined communication channel; by the payer client node, sending, in a case that one or more pieces of signed ciphertext respectively sent by the one or more associated supervision nodes are received, the one or more pieces of signed ciphertext and a zero-knowledge proof to the blockchain, where the zero-knowledge proof is used for verifying whether each piece of transaction-supervision ciphertext corresponding to a piece of signed ciphertext is correct and complete; storing, by a blockchain verification node, the one or more pieces of signed ciphertext on the blockchain, in a case that the zero-knowledge proof is valid; and by each associated supervision node of the one or more associated supervision nodes, changing the transaction state of the transaction plaintext to a second state in a case that a corresponding piece of signed ciphertext is detected to have been stored in the blockchain.

In some embodiments, the transaction plaintext includes payee identity information, a transaction amount, and payer identity information; and the transaction ciphertext includes an encrypted payer address, an encrypted payment amount, and an encrypted payee address, where the encrypted payment amount is obtained by encrypting the transaction amount based on a first amount encryption parameter and a second amount encryption parameter, the first amount encryption parameter being used by a payee client node to encrypt the transaction amount, and the second amount encryption parameter being used by the payer client node to encrypt the transaction amount.

In some embodiments, the one or more supervision public keys respectively corresponding to the one or more associated supervision nodes are stored in a know your customer (KYC) contract, and an element of a vector matrix in the KYC contract include a user-identity vector, a supervision-identity vector, and a public-key vector, where the user-identity vector stores the payee identity information and the payer identity information, the supervision-identity vector stores identity information of the one or more associated supervision nodes, and the public-key vector stores a payee public key, a payer public key, and the one or more supervision public keys.

In some embodiments, the one or more supervision public keys include a first supervision public key, a second supervision public key, and a third supervision public key, where an associated supervision node corresponding to the first supervision public key has an authority to supervise a payer client among the supervised objects related to the transaction, an associated supervision node corresponding to the second supervision public key has an authority to supervise a payee client among the supervised objects related to the transaction, and an associated supervision node corresponding to the third supervision public key has an authority to supervise a type of digital currency that the transaction amount belongs among the supervised objects related to the transaction.

In some embodiments, the predetermined communication channel is a communication channel established through a peer-to-peer (P2P) network.

In some embodiments, the to-be-supervised information further includes a signed payer address obtained by signing the encrypted payer address based on a payer private key corresponding to the payer client node, a signed payee address obtained by signing the encrypted payee address based on a payee private key corresponding to the payee client node involved in the transaction, and a first amount encryption parameter; the in a case that the transaction plaintext is correct and complete, signing the transaction ciphertext based on the supervision private key to obtain a piece of signed ciphertext by each associated supervision node of the one or more associated supervision nodes, including: by each associated supervision node of the one or more associated supervision nodes, signing the transaction ciphertext based on the supervision private key to obtain the piece of signed ciphertext in a case that a predetermined condition is met and the transaction plaintext is correct and complete, where the predetermined condition includes: the signed payer address passing verification of the payer public key corresponding to the payer client node, the signed payee address passing verification of the payee public key corresponding to the payee client node, and the encrypted payment amount being obtained based on the first amount encryption parameter, the second amount encryption parameter and the transaction amount.

In some embodiments, the transaction supervision method based on the blockchain further includes: receiving, by the payer client node, a first amount encryption parameter sent by a payee client node; and encrypting, by the payer client node, the transaction amount based on Pedersen commitment and using the first amount encryption parameter and a second amount encryption parameter as a confusion factor respectively, to obtain the encrypted payment amount.

In some embodiments, the zero-knowledge proof is used to perform at least one of: verifying that the transaction amount is greater than or equal to 0 and an account balance at a payer address is greater than or equal to the transaction amount, based on the first amount encryption parameter, the second amount encryption parameter, and Pedersen commitment; verifying whether payer location information is correct based on a payer public key and a signed payer address in the KYC contract; verifying whether payee location information is correct based on a payee public key and the signed payee address in the KYC contract; verifying whether to-be-supervised information corresponding to each piece of transaction-supervision ciphertext of the one or more pieces of transaction-supervision ciphertext is the same, based on the first supervision public key, the second supervision public key, and the third supervision public key in the KYC contract; where the payer location information refers to location information of the payer public key corresponding to the payer client node in the KYC contract; the payee location information refers to location information of the payee public key corresponding to the payee client node in the KYC contract, and the payee client node is a client node corresponding to a payee of the transaction; the first supervision public key is a supervision public key corresponding to the payer location information in the KYC contract; the second supervision public key is a supervision public key corresponding to the payee location information in the KYC contract; and the third supervision public key is a supervision public key corresponding to a digital-currency contract-address location information in the KYC contract.

In some embodiments, the encrypted payee address is obtained by encrypting the payee address based on an asymmetric key-pseudonym algorithm; the encrypted payer address is obtained by encrypting the payer address based on the asymmetric key-pseudonym algorithm.

In another aspect, a transaction supervision method based on a blockchain is provided, where the transaction supervision method is applied to a payer client node and includes: obtaining transaction plaintext of a transaction; constructing transaction ciphertext based on the transaction plaintext, where the transaction involves one or more associated supervision nodes; encrypting to-be-supervised information respectively based on one or more supervision public keys respectively corresponding to the one or more associated supervision nodes to obtain one or more pieces of transaction-supervision ciphertext, and sending the one or more pieces of transaction- supervision ciphertext to the one or more associated supervision nodes respectively via a predetermined communication channel, where the to-be-supervised information includes the transaction ciphertext and the transaction plaintext; and sending, in a case that one or more pieces of signed ciphertext respectively sent by the one or more associated supervision nodes are received, the one or more signed ciphertext and a zero-knowledge proof to the blockchain, where the zero-knowledge proof is used to verify whether each piece of transaction-supervision ciphertext corresponding to a piece of signed ciphertext is correct and complete.

In another aspect, a transaction supervision method based on a blockchain is provided, where the transaction supervision method is applied to each of one or more associated supervision nodes and includes: obtaining a corresponding piece of transaction-supervision ciphertext via a predetermined communication channel, decrypting the corresponding piece transaction-supervision ciphertext based on a supervision private key of the associated supervision nodes to obtain to-be-supervised information; in a case that the transaction plaintext in the to-be-supervised information is correct and complete, signing the transaction ciphertext based on the supervision private key to obtain a piece of signed ciphertext, determining a transaction state of the transaction plaintext as a first state, and sending the piece of signed ciphertext to a payer client node via the predetermined communication channel; where the corresponding piece of transaction-supervision ciphertext is obtained by the payer client node encrypting the to-be-supervised information based on the supervision public key, the to-be-supervised information includes the transaction ciphertext and the transaction plaintext, and the transaction ciphertext is constructed based on the transaction plaintext ; and changing the transaction state of the transaction plaintext to a second state, in a case that the piece of signed ciphertext is detected to have been stored in the blockchain.

In another aspect, a transaction supervision system based on a blockchain is provided, and the transaction supervision system includes: a payer client node, a blockchain verification node and one or more associated supervision nodes; where the payer client node is configured to obtain transaction plaintext of a transaction and transaction ciphertext based on the transaction plaintext, where the transaction involves the one or more associated supervision nodes; encrypt to-be-supervised information respectively based on one or more supervision public keys respectively corresponding to the one or more associated supervision nodes to obtain one or more pieces of transaction-supervision ciphertext, and send the one or more pieces of transaction- supervision ciphertext to the one or more associated supervision nodes respectively via a predetermined communication channel, where the to-be-supervised information includes the transaction ciphertext and the transaction plaintext; each associated supervision node is configured to obtain a corresponding piece of transaction-supervision ciphertext via the predetermined communication channel, decrypt the corresponding piece transaction-supervision ciphertext based on a supervision private key of the associated supervision nodes to obtain to-be-supervised information, and in a case that the transaction plaintext in the to-be-supervised information is correct and complete, sign the transaction ciphertext based on the supervision private key to obtain a piece of signed ciphertext, determine a transaction state of the transaction plaintext as a first state, and send the piece of signed ciphertext to the payer client node via the predetermined communication channel; the payer client node is configured to send, in a case that one or more pieces of signed ciphertext respectively sent by the one or more associated supervision nodes are received, the one or more pieces of signed ciphertext and a zero-knowledge proof to the blockchain, where the zero-knowledge proof is used for verifying whether each piece of transaction-supervision ciphertext corresponding to a piece of signed ciphertext is correct and complete; the blockchain verification node is configured to store the one or more pieces of signed ciphertext on the blockchain, in a case that the zero-knowledge proof is valid; and each associated supervision node is configured to change the transaction state of the transaction plaintext to a second state, in a case that a piece of signed ciphertext corresponding to the associated supervision node is detected to have been stored in the blockchain.

In another aspect, a transaction supervision apparatus based on a blockchain is provided, where the transaction supervision apparatus is applied to a payer client node and includes: a first processing unit, a second processing unit, and a sending unit; where the first processing unit is configured to obtain transaction plaintext of a transaction and construct transaction ciphertext based on the transaction plaintext, where the transaction involves one or more associated supervision nodes; the second processing unit is configured to encrypt to-be-supervised information respectively based on one or more supervision public keys respectively corresponding to the one or more associated supervision nodes to obtain one or more pieces of transaction-supervision ciphertext, and send the one or more pieces of transaction-supervision ciphertext to the one or more associated supervision nodes respectively via a predetermined communication channel, where the to-be-supervised information includes the transaction ciphertext and the transaction plaintext; and the sending unit is configured to send, in a case that one or more pieces of signed ciphertext respectively sent by the one or more associated supervision nodes are received, the one or more signed ciphertext and a zero-knowledge proof to the blockchain, where the zero-knowledge proof is used to verify whether each piece of transaction-supervision ciphertext corresponding to a piece of signed ciphertext is correct and complete.

In another aspect, a transaction supervision apparatus based on a blockchain is provided, where the transaction supervision apparatus is applied to each of one or more associated supervision nodes and includes: an obtaining unit and a changing unit; where the obtaining unit is configured to obtain a corresponding piece of transaction-supervision ciphertext via a predetermined communication channel, decrypt the corresponding piece transaction-supervision ciphertext based on a supervision private key of the associated supervision nodes to obtain to-be-supervised information; and in a case that the transaction plaintext in the to-be-supervised information is correct and complete, sign the transaction ciphertext based on the supervision private key to obtain a piece of signed ciphertext, determine a transaction state of the transaction plaintext as a first state, and send the piece of signed ciphertext to a payer client node via the predetermined communication channel; where the corresponding piece of transaction-supervision ciphertext is obtained by the payer client node encrypting the to-be-supervised information based on the supervision public key, the to-be-supervised information includes the transaction ciphertext and the transaction plaintext, and the transaction ciphertext is constructed based on the transaction plaintext; and the changing unit is configured to change the transaction state of the transaction plaintext to a second state, in a case that the piece of signed ciphertext is detected to have been stored in the blockchain.

In another aspect, an electronic device is provided and the electronic device includes: a processor and a memory; where the memory is configured to store computer-executable instructions, and when the electronic device is running, the processor executes the computer-executable instructions stored in the memory to cause the electronic device to perform the transaction supervision method based on the blockchain described in any of the above aspects.

In another aspect, a computer-readable storage medium is provided, where the computer-readable storage medium stores instructions, and the instructions, when executed on a computer, cause the computer to perform the transaction supervision method based on the blockchain described in any of the above aspects.

## BRIEF DESCRIPTION OF THE DRAWINGS

FIG. 1 is a structural diagram of a transaction supervision system based on a blockchain according to some embodiments;

FIG. 2 is a flowchart of a transaction supervision method based on a blockchain according to some embodiments;

FIG. 3 is a flowchart of another transaction supervision method based on a blockchain according to some embodiments;

FIG. 4 is a flowchart of another transaction supervision method based on a blockchain according to some embodiments;

FIG. 5 is a dataflow diagram of a transaction supervision method based on a blockchain according to some embodiments;

FIG. 6 is a structural block diagram of a transaction supervision system based on a blockchain according to some embodiments;

FIG. 7 is a structural diagram of a transaction supervision apparatus based on a blockchain according to some embodiments;

FIG. 8 is a structural diagram of another transaction supervision apparatus based on a blockchain according to some embodiments; and

FIG. 9 is a structural diagram of an electronic device according to some embodiments.

## DETAILED DESCRIPTION

Hereinafter, the technical solutions according to the embodiments of the present disclosure are to be described in conjunction with the drawings in the embodiments of the present disclosure. In the description of the embodiments of the present disclosure, unless otherwise specified, "/" means an "or" relationship between two associated objects. For example, A/B means A or B. The "and/or" in the embodiments of the present disclosure is only an association relationship that describes the associated objects, which means that there may be three kinds of relationships. For example, A and/or B may mean that there are three cases: A alone, A and B at the same time, and B alone. A, B may be singular or plural.

In addition, in the description of the embodiments of the present disclosure, unless otherwise specified, "multiple" refers to two or more. The expression of "at least one of the following" or a similar expression refers to any combination of items, including any combination of single items or plural items. For example, "at least one of a, b, or c" may indicate a case that there is only a, a case that there is only b, a case that there is only c, a case that there are both a and b, a case that there are both b and c, a case that there are both a and c, or a case that there are a, b, and c. Each of a, b, and c may have a quantity of one or more in such cases.

In addition, in order to facilitate a clear description of the technical solutions according to the embodiments of the present disclosure, words such as "first" and "second" are used in some embodiments of the present disclosure to distinguish the same items or similar items having substantially identical functions. Those skilled in the art may understand that the terms "first" and "second" do not limit a quantity and an operation order, and the terms "first" and "second" are not necessarily limited to indicate different entities. In the embodiments of the present disclosure, words such as "exemplary" or "for example" are used for examples, illustrations or description. Any embodiment or design scheme described as "exemplary" or "for example" in the embodiments of the present disclosure shall not be interpreted as preferable or advantageous over other embodiments or designs. Specifically, the terms "exemplary" or "for example" aims to present a relevant concept in a specific way to facilitate understanding.

In addition, the blockchain architecture and the transaction supervision scenario described in some embodiments of the present disclosure are for the purpose of more clearly explaining the technical solutions of the embodiments of the present disclosure, and do not constitute a limitation on the technical solutions provided by the embodiments of the present disclosure. Those skilled in the art can understand that the technical solutions provided by the embodiments of the present disclosure are equally applicable to similar technical problems with the occurrence of the blockchain architecture and the transaction supervision scenario.

A blockchain is a chain-like storage structure composed of multiple blocks. Each of the blocks stores a certain amount of information, and the blocks are connected in a chronological order of their generation to form a chain. The blockchain has two core characteristics. First, it is difficult to tamper with data therein, and second, the blockchain is decentralized. Based on the two characteristics, information recorded on the blockchain is more authentic and reliable

Distributed storage of ciphertext on the blockchain can improve the privacy of user data and improve the collaboration efficiency of relevant parties of the ciphertext. However, the requirement for ledger consistency in the blockchain involves a data privacy issue, which may be disadvantageous to the supervision of user transaction information. Assuming that a transaction recorded on the blockchain involves associated supervision parties including the supervision party for supervising the payee of this transaction, the supervision party for supervising the payer of this transaction, and the supervision party for supervising the digital currency involved in this transaction, then the associated supervision parties can obtain the transaction information and verify the compliance and legality thereof, while other supervision parties or users cannot obtain the transaction information. Associated supervision parties may supervise the transaction information by means of post-event supervision, that is, supervise the transaction information of completed transactions.

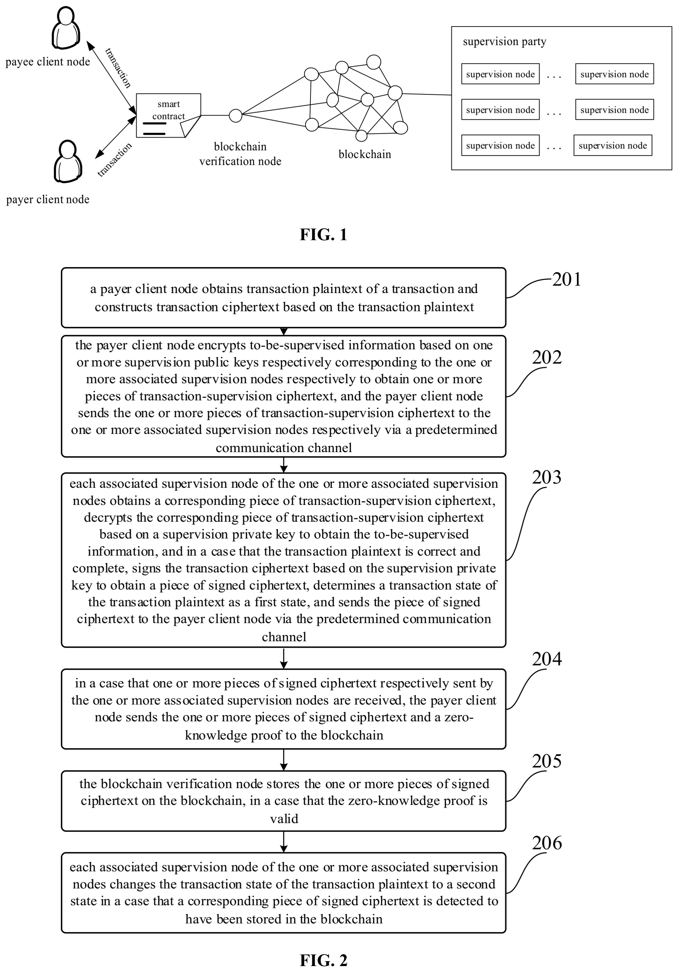

A transaction supervision method based on a blockchain is provided according to the embodiments of the present disclosure, which may be applied to a structural diagram of a transaction supervision system based on a blockchain as shown in FIG. 1. As shown in FIG. 1, the associated supervision party in the transaction supervision system based on the blockchain can be used to improve the privacy of blockchain data and improve the compliance and legality of transaction information. The transaction supervision system based on the blockchain includes: a payee client node, a payer client node, a blockchain, a blockchain verification node and one or more associated supervision nodes.

The payee client node refers to a client node corresponding to a user account utilized by the payee and authenticated on the blockchain in any transaction. In a case that the payee client node and the payer client node reach an agreement on the transaction through a smart contract, the payee client node may provide a payee address and a transaction amount. To enhance the payee's privacy and cut off a connection between the payer and payee, the payee client node may encrypt the payee address using a preset encryption method. In a case that an encrypted payee address is used to receive the transaction amount from the payer client node, the payee client node may encrypt the transaction amount and transmit an encrypted transaction amount during the payment process. After receiving the encrypted transaction amount, the payee client node may decrypt the encrypted transaction amount and update a current account balance at the payee address based on a decrypted actual transaction amount.

The payer client node refers to a client node corresponding to a user account utilized by the payer and authenticated on the blockchain. In the case that the payee client node and the payer client node reach the agreement on the transaction through the smart contract, the payer client node performs a payment based on the encrypted payee address and the transaction amount to complete the above transaction. The payer client node is further configured for uploading transaction ciphertext of the transaction to the blockchain. The transaction ciphertext is obtained by encrypting transaction plaintext of the transaction.

The blockchain verification node refers to a node configured for verifying whether the transaction ciphertext can be stored on the blockchain and further configured for storing the verified transaction ciphertext on the blockchain.

The one or more associated supervision nodes refer to nodes of supervision parties configured for supervising the transaction. Since supervised objects of supervision nodes are preset, the one or more associated supervision nodes for supervising the above transaction are retrieved from the supervision nodes based on the payer client node, the payee client node, and the type of the digital currency corresponding to the transaction amount involved in the transaction. The one or more associated supervision nodes can obtain one or more pieces of transaction-supervision ciphertext of the transaction from the blockchain and decrypt the one or more pieces of transaction-supervision ciphertext.

To improve the compliance and legality of transaction information while improving data privacy, as shown in FIG. 2, the transaction supervision method based on the blockchain including steps 201 to 206 is provided according to an embodiment of the present disclosure.

In step 201, a payer client node obtains transaction plaintext of a transaction and constructs transaction ciphertext based on the transaction plaintext.

In some embodiments of the present disclosure, the transaction plaintext includes payee identity information, a transaction amount, and payer identity information. The transaction ciphertext includes an encrypted payer address, an encrypted payment amount, and an encrypted payee address. The encrypted payment amount is obtained by encrypting the transaction amount based on a first amount encryption parameter and a second amount encryption parameter. The first amount encryption parameter is a parameter used by the payee client node to encrypt the transaction amount. The second amount encryption parameter is a parameter used by the payer client node to encrypt the transaction amount.

The payee identity information or the payer identity information may include a user identifier, a physical address, an account name, and the like. The transaction amount represents an actual amount involved in the transaction process, including a numerical value of the transaction amount and a type of digital currency involved in the transaction, for example, 100 units of digital currency with a type P or 20 units of digital currency with a type Q.

In some embodiments of the present disclosure, the transaction involves one or more associated supervision nodes. For example, the associated supervision nodes may include: a supervision node for supervising the payee, a supervision node for supervising the payer, and a supervision node for supervising the digital currency.

In some embodiments of the present disclosure, relying on the technology of the blockchain, the transaction is completed when one or more associated supervision nodes supervise and verify the transaction plaintext, record the transaction ciphertext on the blockchain, and confirm the transaction ciphertext. Alternatively, the transaction is completed when one or more associated supervision nodes supervise and verify the transaction plaintext, record the signed ciphertext on the blockchain, and the signed ciphertext identifies that the transaction ciphertext is confirmed by the associated supervision node.

In this way, the transaction ciphertext stored in the blockchain is obtained and constituted based on the transaction plaintext. For a transaction user (a payer user and a payee user), the transaction amount, the user account information, the payee address and the payer address are all encrypted and cannot be known by user accounts besides the supervision parties, so as to improve the privacy of user data.

In some embodiments, the payer client node may obtain the encrypted payee address and the transaction amount in the transaction. The transaction amount is the actual amount during the transaction. To create the transaction ciphertext, the payer client node first obtains the first amount encryption parameter from the payee and the encrypted payee address provided by the payee client node, and then according to Pedersen commitment, the first amount encryption parameter and the second amount encryption parameter are used as a confusion factor respectively to encrypt the transaction amount to obtain the encrypted payment amount. Further, the payer client node may encrypt the payer address according to an asymmetric key-pseudonym algorithm to obtain the encrypted payer address.

It should be noted that in the transaction process, the encrypted payee address obtained by the payer client node is obtained by encrypting the payee address according to the asymmetric key-pseudonym algorithm. Similarly, the encrypted payer address is also obtained by encrypting the payer address according to the above asymmetric key-pseudonym algorithm.

It should also be noted that, the payee client node may encrypt the payee address according to the above asymmetric key-pseudonym algorithm to obtain the encrypted payee address. The payer client node may complete the transaction by transferring digital money to the encrypted payee address. In this way, a connection of the real identity information between the payer and the payee is cut off, which facilitates improving the privacy of related information of the payee client node. It can be understood that, the payer client node may obtain the payer address, the transaction amount and the encrypted payee address.

In some embodiments of the present disclosure, the asymmetric key-pseudonym algorithm includes two keys (a public key and a private key). If data is encrypted with the public key, only a corresponding private key can be used for decryption. The encryption and decryption use different keys, so the algorithm is referred to as an asymmetric encryption algorithm. The asymmetric encryption algorithm does not require key exchange between encryption and decryption parties, providing better confidentiality. The asymmetric key-pseudonym algorithm refers to a data processing method in which an original identifier is replaced with newly generated characters. In a case that a pseudonym is generated by a hash function and a tokenization technique, an additional mapping table between the pseudonym and the original identifier is typically generated for identifier reversion.

It should be understood that the asymmetric key-pseudonym algorithm is a general term for a class of algorithms. Two different hash functions may be used as the public key and the private key respectively. By encrypting the payer address or payee address, the encrypted payer address or encrypted payee address, and private keys are used for decryption when performing transaction. Information such as an account balance of a payer user account, an account balance of a payee user account, and a transaction histories of user accounts is updated based on the transaction amount. The asymmetric key-pseudonym algorithm may include a Diffie-Hellman algorithm for securely transmitting a shared key over an insecure network, an Elgamal asymmetric encryption algorithm based on Diffie-Hellman key exchange, a knapsack algorithm, and an elliptic curve cryptography algorithm, and the like. The present disclosure does not limit the specific type of the asymmetric key-pseudonym algorithm.

Thus, both the payer address and the payee address are encrypted by using the asymmetric key-pseudonym algorithm. That is, for any client node on the blockchain, whether acting as a payer client node or a payee client node, only one address encryption method is deployed, improving the utilization efficiency of the asymmetric key-pseudonym algorithm and saving system resources for any one of the client nodes. Moreover, for the asymmetric key-pseudonym algorithm, only one key is public, and it is not necessary to send the key to a decryption party, thereby enhancing the confidentiality of the encrypted payee address or an encrypted payer address.

In some embodiments of the present disclosure, the Pedersen commitment is a cryptographic algorithm that allows a committer to submit a value without revealing or being able to change the value. During the transaction, the payee client node can process the transaction amount based on the Pedersen commitment, and the transaction amount remains encrypted and unknown to both the blockchain verification node and the associated supervision nodes involved in the transaction process.

Thus, both the payer client node and the payee client node encrypt the transaction amount by using the Pedersen commitment with different confusion factors, so as to achieve the encryption for the transaction amount and reduce a potential association between the payer client node and the payee client node due to an identical transaction amount, thereby enhancing the confidentiality of first transaction ciphertext.

For example, it is assumed that a payer client node A creates a transaction from an encrypted payer address $address_1$ storing digital currency T to an encrypted payee address $address_2$ of a payee client node B. It is further assumed that the payer client node A stores x units of digital currency T at $address_1$, s1 represents the first amount encryption parameter, s2 represents the second amount encryption parameter, and the transaction amount is 100. Accordingly, the payer client node creates the transaction ciphertext as the following:

$$\mathrm{a} = address_1 \xrightarrow{g^{100} \times h^{s2}} address_2 + g^{x-100} \times h^{s1-s2}$$

The meaning of the above first transaction ciphertext is as follows. $g^{100} \times h^{s2}$ units of the digital currency T are transferred from the $address_1$ to the $address_2$, and a current account balance in the digital currency T at the $address_1$ is $g^{x-100} \times h^{s1-s2}$. $g^{100} \times h^{s2}$ is obtained by encrypting the transaction amount 100 based on the Pedersen commitment using s2 as the confusion factor, and $g^{x-100} \times h^{s1-s2}$ is obtained by encrypting x-100 based on the Pedersen commitment using s1-s2 as the confusion factor.

In step 202, the payer client node encrypts to-be-supervised information based on one or more supervision public keys respectively corresponding to the one or more associated supervision nodes respectively to obtain one or more pieces of transaction-supervision ciphertext, and the payer client node sends the one or more pieces of transaction-supervision ciphertext to the one or more associated supervision nodes respectively via a predetermined communication channel.

In some embodiments of the present disclosure, the one or more pieces of transaction-supervise ciphertext are obtained by encrypting the to-be-supervised information based on the one or more supervision public keys respectively corresponding to the one or more associated supervision nodes, respectively. The to-be-supervised information includes transaction ciphertext and transaction plaintext.

It is understandable that the pieces of transaction-supervision ciphertext have a one-to-one correspondence with the associated supervision nodes. Based on the supervision public key corresponding to any associated supervision node, the to-be-supervised information is encrypted to obtain the transaction-supervision ciphertext corresponding to this associated supervise node. The payer client node sends the transaction-supervision ciphertext corresponding to this associated supervise node to this associated supervise node via the predetermined communication channel. The transaction-supervision ciphertext corresponding to this associated supervise node may be decrypted based on the supervision private key corresponding to this associated supervise node.

In some embodiments, the one or more supervision public keys respectively corresponding to the one or more associated supervision nodes may be stored in a know your customer (KYC) contract. An element of a vector matrix in the KYC contract includes a user-identity vector, a supervision-identity vector, and a public-key vector. The user-identity vector stores the payee identity information and the payer identity information. The supervision-identity vector stores identity information of the one or more associated supervision nodes. The public-key vector stores a payee public key, a payer public key, and the one or more supervision public keys.

It should be noted that the KYC contract is a smart contract with characteristics of a public content, immutability, permanent operation, a decentralized and uncontrollable for human, trustfree and allowing a transaction to be completed in an untrusted environment. The KYC contract includes a constraint condition and the elements involved in the constraint condition.

User public keys (including the payee public key and the payer public key) are used to encrypt information sent to the payee client node or the payer client node, and the encrypted information may be decrypted based on user private keys. The user private keys may be used to sign data, and the user public keys may be used to verify signed data. Similarly, the supervision public keys are used to encrypt information sent to the associated supervision nodes, and the encrypted information may be decrypted based on supervision private keys. The supervision private keys may be used to sign data, and the supervision public keys may be used to verify signed data. The digital-currency contract-address is used to record the smart contract information that the digital currency involved in the transaction needs to follow, for example, the transaction amount, a transaction time, and the like.

Thus, a transaction rule is recorded in the KYC contract to constrain the transaction, thereby facilitating the confirmation and supervision of the adding of the transaction, and improving the reliability of the transaction.

In some embodiments, the one or more supervision public keys include: a first supervision public key, a second supervision public key, and a third supervision public key. An associated supervision node corresponding to the first supervision public key is configured to supervise the payer client node. An associated supervision node corresponding to the second supervision public key is configured to supervise the payee client node. An associated supervision node corresponding to the third supervision public key is configured to supervise the type of digital currency to which the transaction amount belongs, and is also referred to as a digital-currency management node. Reference is made to a case in which the payer client node encrypts to-be-supervised information based on one supervision public key corresponding to one associated supervision node to obtain a piece of transaction-supervision ciphertext. The supervision public key corresponding to this associated supervision node is the first supervision public key if this associated supervision node is configured to supervise the payer client node. The supervision public key corresponding to this associated supervision node is the second supervision public key if this associated supervision node is configured to supervise the payee client node. The supervision public key corresponding to this associated supervision node is the third supervision public key if the associated supervision node is configured to supervise the type of digital currency to which the transaction amount belongs.

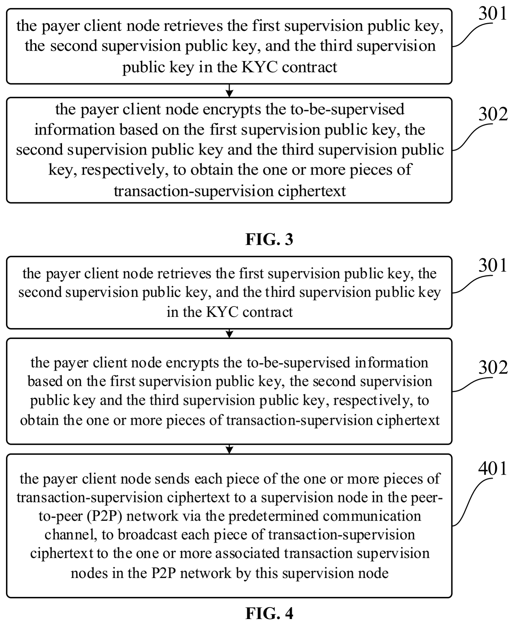

As shown in FIG. 3, before the step 202, the transaction supervision method based on the blockchain provided by some embodiments of the present disclosure may further include the following steps 301 and 302.

In step 301, the payer client node retrieves the first supervision public key, the second supervision public key, and the third supervision public key in the KYC contract.

In step 302, the payer client node encrypts the to-be-supervised information based on the first supervision public key, the second supervision public key and the third supervision public key, respectively, to obtain the one or more pieces of transaction-supervision ciphertext.

In some embodiments of the present disclosure, to improve the privacy of the transaction, the payer client node encrypts the to-be-supervised information, and then sends the one or more pieces of supervision information as encrypted to one or more associated supervision nodes respectively. It should be understood that the encryption method may be an asymmetric key encryption method. Each supervision public key of an associated supervision node may be used to encrypt the to-be-supervised information. Each supervision private key of an associated supervision node may be used to decrypt the encrypted supervision information. The supervision public keys of the associated supervision nodes may be stored in the KYC contract.

It should be understood that the payee client node is a client node corresponding to the payee of the transaction.

In some embodiments of the present disclosure, the payer client node encrypts the to-be-supervised information based on the first supervision public key to obtain a piece of supervision-transaction ciphertext. The payer client node encrypts the to-be-supervised information based on the second supervision public key to obtain a piece of supervision transaction encrypted information. The payer client node encrypts the to-be-supervised information based on the third supervision public key to obtain multiple pieces of supervision-transaction encrypted information.

In some embodiments of the present disclosure, any associated supervision node among the one or more associated supervision nodes has authority to supervise at least one of the following transaction-associated supervised objects: a payer client, a payee client, and a type of digital currency to which the transaction amount belongs. That is, any associated supervision node of the transaction may supervise one supervised object, two supervised objects, three supervised objects, or the like.

It should be noted that any associated supervision node does not perform supervision on other supervised nodes in a point-to-point manner, but supervises full information involved in the transaction. The full information involved in the transaction relates to the payer, the payee, the type of digital currency, and the transaction amount involved in the transaction.

Exemplarily, in a transaction where a first client pays a second client with a third type of digital currency, a first supervision node for supervising the first client may obtain the full information of the transaction; a second supervision node for supervising the second client may obtain the full information of the transaction; and a third supervision node for supervising the third type of digital currency may also obtain the full information of the transaction.

In some embodiments of the present disclosure, the associated supervision nodes of multiple supervised objects have the same supervision public key stored in the KYC contract. For example, the first supervision public key is the same as the second supervision public key, the first supervision public key is the same as the third supervision public key, the second supervision public key is the same as the third supervision public key, or the first supervision public key, the second supervision public key and the third supervision public key are the same. Therefore, the payer client node encrypts the to-be-supervised information based on the same supervision public key to obtain the same supervision transaction encrypted information.

It should be noted that, even if supervision public keys are the same, the payer client node encrypts the to-be-supervised information based on the first supervision public key, the second supervision public key, and the third supervision public key, respectively, to obtain one or more pieces of transaction-supervision ciphertext. Then, the same transaction-supervision ciphertext are sent to one associated supervision node.

In some embodiments of the present disclosure, the to-be-supervised information further includes a signed payer address obtained by signing the encrypted payer address based on a payer private key corresponding to the payer client node, a signed payee address obtained by signing the encrypted payee address based on a payee private key corresponding to the payee client node, and a first amount encryption parameter.

For example, it is assumed that a payer client node A creates a transaction from an encrypted payer address $address_1$ storing digital currency T to an encrypted payee address $address_2$ of a payee client node B. It is further assumed that the payer client node A stores x units of digital currency T at $address_1$, s1 represents the first amount encryption parameter, s2 represents the second amount encryption parameter, and the transaction amount is 100. Based on the above example, a is the transaction ciphertext. Assuming that $b = i \xrightarrow{100\,T} i$ is the transaction plaintext, c is $c = sign_{kA}$ ($address_1$), $sign_{kB}$($address_2$), s1. i is payer location information, j is payee location information, 100T is a transaction amount of 100 units of digital currency with type T, sign $sk_A$($adress_1$) represents the signed payer address, sign $sk_B$ ($adress_2$)represents the signed payee address, s1 is the first amount encryption parameter, and 100 is the transaction amount. The to-be-supervised information info includes a, b and c. $cbpk_M$ represents the first supervision public key, Enc $cbpk_{s1}$(info) represents the transaction-supervision ciphertext obtained by encrypting the to-be-supervised information based on the first supervision public $key, cbpk_N$ represents the second supervision public key, Enc $cbpk_N$(info) represents the transaction-supervision ciphertext obtained by encrypting the to-be-supervised information based on the second supervision public key, $cbpk_P$ represents the third supervision public key, Enc $cbpk_P$(info) represents the transaction-supervision ciphertext obtained by encrypting the to-be-supervised information based on the third supervision public key.

In this way, one or more pieces of transaction-supervision ciphertext can be decrypted by the associated supervision parties respectively corresponding to both parties involved in the transaction (the payer and the payee) and the associated supervision party corresponding to the transaction amount. And then, the associated supervision node may decrypt one of the one or more pieces of transaction-supervision ciphertext sent to the blockchain, to facilitate the supervision of the transaction-supervision ciphertext.

In some embodiments of the present disclosure, the predetermined communication channel is a communication channel established via a Peer To Peer (P2P) network. For example, the payer client node directly sends the transaction-supervision ciphertext corresponding to the first supervision public key to the associated supervision node corresponding to the first supervision public key via the predetermined communication channel. The payer client node directly sends the transaction-supervision ciphertext corresponding to the second supervision public key to the associated supervision node corresponding to the second supervision public key via the predetermined communication channel. The payer client node directly sends the transaction-supervision ciphertext corresponding to the third supervision public key to the associated supervision node corresponding to the third supervision public key via the predetermined communication channel.

In some embodiments, as shown in FIG. 3 and FIG. 4, the step 202 may be implemented by the following step 401.

In step 401, the payer client node sends each piece of the one or more pieces of transaction-supervision ciphertext to a supervision node in the peer-to-peer (P2P) network via the predetermined communication channel, to broadcast each piece of transaction-supervision ciphertext to the one or more associated transaction supervision nodes in the P2P network by this supervision node.

In some embodiments of the present disclosure, the Peer-to-Peer network is a distributed application architecture that distributes tasks and workloads among peers, and is a networking or network form formed by the Peer-to-Peer computing model at the application layer. In a case that all supervision nodes form the P2P network, all the supervision nodes are able to directly share information in the P2P network. Therefore, once the payer client node sends the one or more pieces of transaction-supervision ciphertext to any supervision node in the peer-to-peer P2P network, each piece of transaction-supervision ciphertext is broadcasted to other associated supervision nodes in the peer-to-peer P2P network by this supervision node. The associated supervision nodes in the P2P network are able to receive each piece of transaction-supervision ciphertext.

In some embodiments of the present disclosure, the predetermined communication channel may be a wired network channel or a wireless network channel. The type of the predetermined channel is not limited in the present disclosure.

In this way, without a supervision public key for encrypting the transaction-supervision ciphertext being used, the one or more pieces of transaction-supervision ciphertext may be conveniently sent to the associated supervision node corresponding to the supervision public key via the P2P network, which releases the problem that the supervision private key of the associated supervision node does not match the supervision public key used for the received transaction-supervision ciphertext, and further releases the problem that the associated supervision node cannot supervise the transaction-supervision ciphertext, so as to improve the supervision efficiency of the associated supervision node.

In step 203, each associated supervision node of the one or more associated supervision nodes obtains a corresponding piece of transaction-supervision ciphertext, decrypts the corresponding piece of transaction-supervision ciphertext based on a supervision private key to obtain the to-be-supervised information, and in a case that the transaction plaintext is correct and complete, signs the transaction ciphertext based on the supervision private key to obtain a piece of signed ciphertext, determines a transaction state of the transaction plaintext as a first state, and sends the piece of signed ciphertext to the payer client node via the predetermined communication channel.

It should be noted that the corresponding piece of transaction-supervision ciphertext obtained by each associated supervision node refers to the transaction-supervision ciphertext encrypted by a supervision public key of this associated supervision node. The associated supervision node receiving a piece of transaction-supervision ciphertext decrypts the piece of transaction-supervision ciphertext via the supervision private key of this associated supervision node. A supervision public key and a supervision private key form a key pair based on an encryption algorithm. Each associated supervision node includes at least one key pair, the supervision private key is stored in the associated supervision node, and the supervision public key is stored in the KYC contract.

In some embodiments of the present disclosure, the one or more associated supervision nodes obtain each piece of transaction-supervision ciphertext included in a broadcast message from the P2P network. In the obtained transaction-supervision ciphertext, each of the one or more associated supervision nodes may decrypt a corresponding piece of transaction-supervision ciphertext encrypted by a supervision public key of this associated supervision node, based on the supervision private key thereof, to obtain the to-be-supervised information in the corresponding piece of transaction-supervision ciphertext. And then, each of the one or more associated supervision nodes may obtain the transaction plaintext in the to-be-supervised information and determine whether the transaction plaintext is correct and complete. In a case that the transaction plaintext is correct and complete, each of the one or more associated supervision nodes may sign the transaction ciphertext based on the supervision private key thereof, obtain the signed ciphertext, and determine the transaction state of the transaction plaintext as the first state.

It should be noted that the associated supervision node may also set a local ledger, and record the transaction plaintext and the transaction status corresponding to the transaction plaintext in the local ledger. Since the associated supervision node in some embodiments of the present disclosure supervises the transaction in advance, the transaction state of the transaction plaintext is determined as the first state. The first state may be understood as the transaction being not completed. With the transaction plaintext and the transaction state, a unified supervision of the payer, the payee, and the type of digital currency corresponding to the transaction amount involved in the transaction is realized.

In some embodiments of the present disclosure, the signed ciphertext may be sent to the payer client node via the predetermined communication channel, or may be sent to the payer client node in other ways. The sending way of the signed ciphertext is not limited in the present disclosure.

In some embodiments of the present disclosure, in a case that a predetermined condition is met the transaction plaintext is correct and complete, each associated supervision node may sign the transaction ciphertext based on the supervision private key thereof to obtain a piece of signed ciphertext. The predetermined condition includes that the signed payer address being verified by the payer public key corresponding to the payer client node, the signed payee address being verified by the payee public key corresponding to the payee client node, and the encrypted payment amount being obtained based on the first amount encryption parameter, the second amount encryption parameter, and the transaction amount.

In this way, each associated supervision node verifies the signed payer address (payer identity information), the signed payee address (payee identity information), and the encrypted payment amount. After passing the verification, the signed ciphertext can be obtained to confirm the supervision authority of each associated supervision node, thereby further supporting supervision of the transaction-supervision ciphertext, and improving the supervision accuracy of the associated supervision nodes.

In step 204, in a case that one or more pieces of signed ciphertext respectively sent by the one or more associated supervision nodes are received, the payer client node sends the one or more pieces of signed ciphertext and a zero-knowledge proof to the blockchain.

In some embodiments of the present disclosure, the zero-knowledge proof is used to prove whether each piece of transaction-supervision ciphertext corresponding to a piece of signed ciphertext is correct and complete.

In some embodiments of the present disclosure, the zero-knowledge proof is used to perform at least one of the following: verifying, based on the first amount encryption parameter, the second amount encryption parameter, and the Pedersen commitment, whether the transaction amount in reporting information is greater than or equal to 0 and whether the current account balance at the payer address is greater than or equal to the transaction amount; verifying whether the payer address is correct based on the payer public key and the signed payer address in the KYC contract; verifying whether the payee address is correct based on the payee public key and the signed payee address in the KYC contract; or verifying whether to-be-supervised information corresponding to each piece of transaction-supervision ciphertext of the one or more pieces of transaction-supervision ciphertext is the same, based on the first supervision public key, the second supervision public key, and the third supervision public key in the KYC contract. The payer location information refers to location information of the payer public key corresponding to the payer client node in the KYC contract. The payee location information refers to location information of the payee public key corresponding to the payee client node in the KYC contract. The payee client node is a client node corresponding to the payee of the transaction. The first supervision public key is a supervision public key corresponding to the payer location information in the KYC contract. The second supervision public key is a supervision public key corresponding to the payer location information in the KYC contract. The third supervision public key is a supervision public key corresponding to a digital-currency contract-address location information in the KYC contract.

In the first example, the Pedersen commitment means being verifiable and being equal or not. That is, the transaction amount is encrypted through the Pedersen commitment to enable the blockchain verification node to verify whether funds are illegally created or destroyed in the transaction. In the case of passing the verification, it may be proved that the encrypted transaction amount is greater than or equal to 0, and that the account balance at the payer address is greater than or equal to the transaction amount.

In the second example, the payer public key corresponding to the payer location information is retrieved in the KYC contract. In a case that the payer public key corresponding to the payer location information is able to decrypt the signed payer address, the payer location information is verified to be correct.

In the third example, the payee public key corresponding to the payee location information is retrieved in the KYC contract. In a case that the payee public key corresponding to the payee location information is able to decrypt the signed payee address, the payee location information is verified to be correct.

In the fourth example, a first supervision public key corresponding to the payer location information, a second supervision public key corresponding to the payee location information, and a third supervision public key corresponding to digital-currency contract-address location information are retrieved in the KYC contract. In a case that the same to-be-supervised information is obtained by decrypting each piece of the one or more pieces of transaction-supervision ciphertext based on the first supervision public key, the second supervision public key, and the third supervision public key, respectively, the one or more pieces of transaction-supervision ciphertext are verified to be correct. Based on the above example, it is necessary to verify: $\text{checksig}(a|1, S_M, cbpkM) = \text{True}$, $\text{checksig}(a|2, S_P, cbpkP) = \text{True}$, $\text{checksig}(a|3, S_N, cbpkN) = \text{True}$.

In this way, with the zero-knowledge proof and Pedersen commitment, the blockchain verification node is able to verify the correctness and completeness of the transaction ciphertext without knowing the transaction plaintext. Since the transaction-related information stored on the blockchain is immutable, the correctness and integrity of the transaction-related information stored on the blockchain is improved, and storage resources on the blockchain are saved.

In step 205, the blockchain verification node stores the one or more pieces of signed ciphertext on the blockchain, in a case that the zero-knowledge proof is valid.

In some embodiments of the present disclosure, the blockchain verification node is a node on the blockchain that verifies data information stored to the blockchain. The data information passing the verification is stored on the blockchain.

In some embodiments of the present disclosure, the blockchain verification node, based on a verification target of the zero-knowledge proof, presets a verification program and inputs the signed ciphertext and the KYC contract into the preset verification program, so as to determine whether the zero-knowledge proof is valid.

In some embodiments of the present disclosure, after the signed ciphertext is stored on the blockchain, the payer client node completes the transaction and updates the account balance at the payer address and payee address.

In step 206, each associated supervision node of the one or more associated supervision nodes changes the transaction state of the transaction plaintext to a second state in a case that a corresponding piece of signed ciphertext is detected to have been stored in the blockchain.

In some embodiments of the present disclosure, each associated supervision node periodically performs searching on the blockchain for transactions whose transaction status is the first state in the local ledger. Each of the associated supervision nodes may change the transaction state of the transaction plaintext to a second state, in a case that the signed ciphertext is detected to be stored on the blockchain.

It should be noted that the second state may be understood as that the transaction is completed and stored on the blockchain. Based on the transaction plaintext and the transaction state, a unified supervision of the payer, the payee, and the type of digital currency corresponding to the transaction amount involved in the transaction is realized.

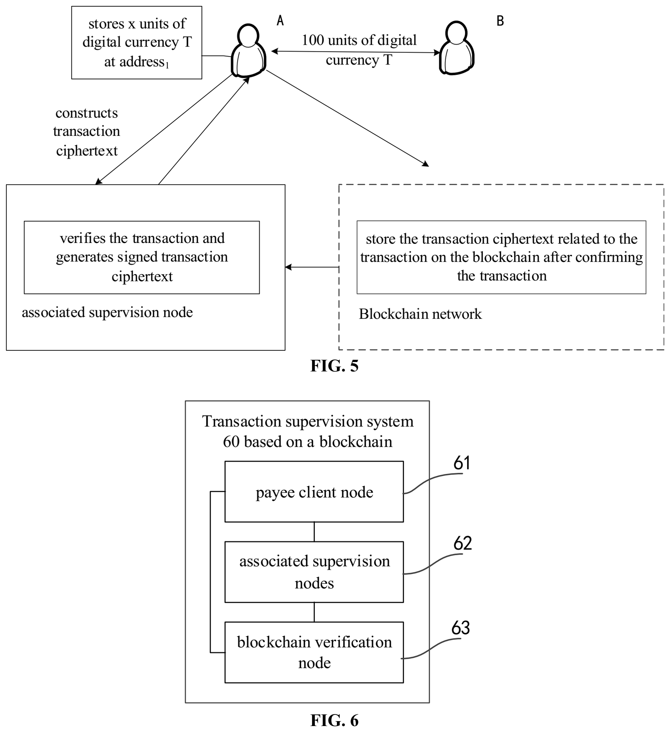

Exemplarily, as shown in FIG. 5, it is assumed that a payer client node A constructs a transaction from an encrypted payer address $address_1$ storing digital currency T to an encrypted payee address $address_2$ of a payee client node B. It is further assumed that the payer client node A stores x units of digital currency T at $address_1$, s1 represents the first amount encryption parameter, s2 represents the second amount encryption parameter, and the transaction amount is 100. The above transaction is sent to the associated supervision nodes, and after the associated supervision nodes verify and supervise the transaction, the signed ciphertext is sent to the payer client node. And then, the payer client node sends the signed ciphertext to the blockchain, and after the blockchain confirms the signed ciphertext, the transaction is continued, so as to facilitate the associated supervision nodes to update the transaction state depending on whether the signed ciphertext of the transaction is store on the blockchain.

In this way, by constructing the transaction ciphertext via the payer client node, the confidentiality of the transaction information can be improved, and the privacy of the private information in the transaction information stored on the blockchain can be improved. The to-be-supervised information (that is, the transaction plaintext and the transaction ciphertext) is encrypted based on one or more supervision public keys respectively corresponding to one or more associated supervision nodes, to obtain one or more pieces of transaction-supervision ciphertext. Therefore, each associated supervision node is able to decrypt a corresponding piece of transaction supervision-ciphertext encrypted by its supervision public key via its supervision private key, and then obtains the to-be-supervised information. Via the predetermined communication channel, the one or more pieces of transaction-supervision ciphertext are sent to respective associated supervision nodes, so that the associated supervision nodes involved in the transaction are able to obtain respective pieces of transaction-supervision ciphertext, while other supervision nodes are not able to obtain the pieces of transaction-supervision ciphertext, thereby improving the confidentiality of the transaction-related information. The associated supervision node performs supervision on the transaction before completing the transaction, which can improve the reliability and confidentiality of the transaction, and it is not necessary to send information required to be supervised to the blockchain, reducing the transaction-associated information stored on the blockchain, and saving the storage space on the blockchain.

The solutions of the embodiments of the present disclosure are described above mainly from the perspective of a system method. From the perspective of a one-sided method, in a case that the transaction supervision method based on a blockchain is applied to a payer client node, the method includes: obtaining transaction plaintext of a transaction; constructing transaction ciphertext based on the transaction plaintext, where the transaction involves one or more associated supervision nodes; encrypting to-be-supervised information respectively based on one or more supervision public keys respectively corresponding to the one or more associated supervision nodes to obtain one or more pieces of transaction-supervision ciphertext, and sending the one or more pieces of transaction- supervision ciphertext to the one or more associated supervision nodes respectively via a predetermined communication channel, where the to-be-supervised information includes the transaction ciphertext and the transaction plaintext; and sending, in a case that one or more pieces of signed ciphertext respectively sent by the one or more associated supervision nodes are received, the one or more signed ciphertext and a zero-knowledge proof to the blockchain, where the zero-knowledge proof is used to verify whether each piece of transaction-supervision ciphertext corresponding to a piece of signed ciphertext is correct and complete.

In this way, by constructing the transaction ciphertext via the payer client node, the confidentiality of the transaction information can be improved, and the privacy of the private information in the transaction information stored on the blockchain can be improved. The to-be-supervised information is encrypted based on one or more supervision public keys respectively corresponding to one or more associated supervision nodes, to obtain one or more pieces of transaction-supervision ciphertext. Therefore, each associated supervision node is able to obtain corresponding to-be-supervised information via the supervision private key, so that the to-be-supervised information will only be obtained by the corresponding associated supervision node, but cannot be obtained by other supervision nodes, thereby improving the confidentiality of the transaction information.

From the perspective of a one-sided method, in a case that the transaction supervision method based on a blockchain is applied to each associated supervision node of one or more associated supervision nodes, the method includes: obtaining a corresponding piece of transaction-supervision ciphertext via a predetermined communication channel, decrypting the corresponding piece transaction-supervision ciphertext based on a supervision private key of the associated supervision nodes to obtain to-be-supervised information; in a case that the transaction plaintext in the to-be-supervised information is correct and complete, signing the transaction ciphertext based on the supervision private key to obtain a piece of signed ciphertext, determining a transaction state of the transaction plaintext as a first state, and sending the piece of signed ciphertext to a payer client node via the predetermined communication channel; where the corresponding piece of transaction-supervision ciphertext is obtained by the payer client node encrypting the to-be-supervised information based on the supervision public key, the to-be-supervised information includes the transaction ciphertext and the transaction plaintext, and the transaction ciphertext is constructed based on the transaction plaintext; and changing the transaction state of the transaction plaintext to a second state, in a case that the piece of signed ciphertext is detected to have been stored in the blockchain.

In this way, the to-be-supervised information (the transaction plaintext and the transaction ciphertext) is encrypted respectively based on one or more supervision public keys respectively corresponding to one or more associated supervision nodes, so that one or more pieces of transaction-supervision ciphertext are obtained. Therefore, the to-be-supervised information is able to be obtained by the corresponding associated supervision node via the supervision private key, and will not be obtained by other supervise nodes, which improves the confidentiality of transaction information. The associated supervision node performs supervision on the transaction before completing the transaction, which is able to improve the reliability and confidentiality of the transaction, and avoid sending information required to be supervised to the blockchain, reduce the transaction-associated information stored on the blockchain, and save the storage space on the blockchain.

It can be understood that in order to realize the functions described above, the transaction supervision apparatus based on the blockchain includes at least one of a corresponding hardware structure and a software module for performing each function. Those skilled in the art will readily appreciate that in combination with the units and algorithm steps of each example described in the embodiments disclosed herein, the embodiments of the present disclosure can be implemented in hardware or a combination of hardware and computer software. Whether a function is to be performed by hardware or by hardware driven by computer software depends on a specific application and design constraints of the technical solution. Those skilled in the art can use different methods to implement the described functions for each particular application, but it is not to be considered that the implementation goes beyond the scope of the present disclosure.

In the embodiments of the present disclosure, the transaction supervision apparatus based on a blockchain may be divided into functional units based on the method example described above. For example, functional units may be divided based on their functions, or two or more functions may be integrated into one processing unit. The integrated units may be implemented in a form of hardware or in a form of a software functional unit. It should be noted that the division of units in the embodiments of the present disclosure is schematic, which is only a logical function division, and the division may be in other forms in actual implementation.

FIG. 6 is a structural diagram of a transaction supervision system based on a blockchain according to some embodiments of the present disclosure. Referring to FIG. 6, the transaction supervision system 60 based on a blockchain provided according to the embodiment of the present disclosure includes: a payee client node 61, a blockchain verification node 63, and one or more associated supervision nodes 62.

The payer client node 61 is configured to obtain transaction plaintext of a transaction and transaction ciphertext based on the transaction plaintext, where the transaction involves the one or more associated supervision nodes; encrypt to-be-supervised information respectively based on one or more supervision public keys respectively corresponding to the one or more associated supervision nodes to obtain one or more pieces of transaction-supervision ciphertext, and send the one or more pieces of transaction-supervision ciphertext to the one or more associated supervision nodes respectively via a predetermined communication channel, where the to-be-supervised information includes the transaction ciphertext and the transaction plaintext.

Each of the associated supervision nodes 62 is configured to obtain a corresponding piece of transaction-supervision ciphertext via the predetermined communication channel, decrypt the corresponding piece transaction-supervision ciphertext based on a supervision private key of the associated supervision nodes to obtain to-be-supervised information, and in a case that the transaction plaintext in the to-be-supervised information is correct and complete, sign the transaction ciphertext based on the supervision private key to obtain a piece of signed ciphertext, determine a transaction state of the transaction plaintext as a first state, and send the piece of signed ciphertext to the payer client node via the predetermined communication channel.

The payer client node 61 is further configured to send, in a case that one or more pieces of signed ciphertext respectively sent by the one or more associated supervision nodes are received, the one or more pieces of signed ciphertext and a zero-knowledge proof to the blockchain, where the zero-knowledge proof is used for verifying whether each piece of transaction-supervision ciphertext corresponding to a piece of signed ciphertext is correct and complete.

The blockchain verification node 63 is configured to store the one or more pieces of signed ciphertext on the blockchain, in a case that the zero-knowledge proof is valid.

Each of the associated supervision node 61 is further configured to change the transaction state of the transaction plaintext to a second state, in a case that a piece of signed ciphertext corresponding to the associated supervision node is detected to have been stored in the blockchain.

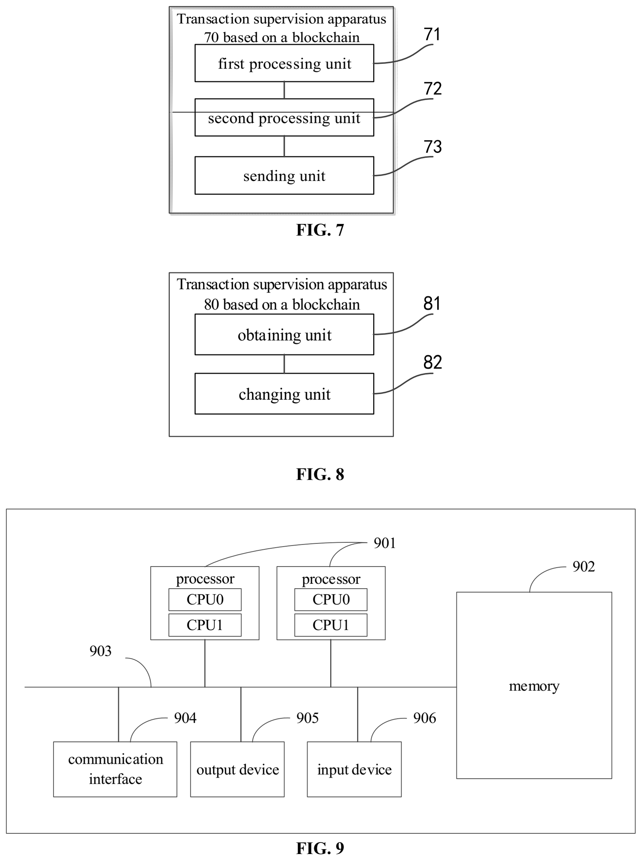

FIG. 7 is a structural diagram of a transaction supervision apparatus based on a blockchain according to some embodiments of the present disclosure. Referring to FIG. 7, the transaction supervision apparatus 70 based on a blockchain is applied to a payer client node, where the transaction supervision apparatus includes: a first processing unit 71, a second processing unit 72, and a sending unit 73.

The first processing unit 71 is configured to obtain transaction plaintext of a transaction and construct transaction ciphertext based on the transaction plaintext, where the transaction involves one or more associated supervision nodes.

The second processing unit 72 is configured to encrypt to-be-supervised information respectively based on one or more supervision public keys respectively corresponding to the one or more associated supervision nodes to obtain one or more pieces of transaction-supervision ciphertext, and send the one or more pieces of transaction-supervision ciphertext to the one or more associated supervision nodes respectively via a predetermined communication channel, where the to-be-supervised information includes the transaction ciphertext and the transaction plaintext.

The sending unit 73 is configured to send, in a case that one or more pieces of signed ciphertext respectively sent by the one or more associated supervision nodes are received, the one or more signed ciphertext and a zero-knowledge proof to the blockchain, where the zero-knowledge proof is used to verify whether each piece of transaction-supervision ciphertext corresponding to a piece of signed ciphertext is correct and complete.

In some embodiments, in the transaction supervision apparatus based on the blockchain, the transaction plaintext includes payee identity information, a transaction amount, and payer identity information; and the transaction ciphertext includes an encrypted payer address, an encrypted payment amount, and an encrypted payee address, where the encrypted payment amount is obtained by encrypting the transaction amount based on a first amount encryption parameter and a second amount encryption parameter, the first amount encryption parameter being used by a payee client node to encrypt the transaction amount, and the second amount encryption parameter being used by the payer client node to encrypt the transaction amount.

In some embodiments, in the transaction supervision apparatus based on the blockchain, the one or more supervision public keys respectively corresponding to the one or more associated supervision nodes are stored in a KYC contract, and an element of a vector matrix in the KYC contract include a user-identity vector, a supervision-identity vector, and a public-key vector, where the user-identity vector stores the payee identity information and the payer identity information, the supervision-identity vector stores identity information of the one or more associated supervision nodes, and the public-key vector stores a payee public key, a payer public key, and the one or more supervision public keys.

In some embodiments, in the transaction supervision apparatus based on the blockchain, the one or more supervision public keys include a first supervision public key, a second supervision public key, and a third supervision public key, where an associated supervision node corresponding to the first supervision public key is configured to supervise a payer client, an associated supervision node corresponding to the second supervision public key is configured to supervise a payee client, and an associated supervision node corresponding to the third supervision public key is configured to supervise a type of digital currency that the transaction amount belongs.

In some embodiments, in the transaction supervision apparatus based on the blockchain, the predetermined communication channel is a communication channel established via a peer-to-peer (P2P) network.

In some embodiments, the transaction supervision apparatus based on the blockchain is further configured to: receive, by the payer client node, a first amount encryption parameter sent by the payee client node; and encrypt, by the payer client node, the transaction amount based on Pedersen commitment and using the first amount encryption parameter and the second amount encryption parameter as a confusing factor respectively, to obtain the encrypted payment amount; where the second amount encryption parameter is a parameter used by the payer client node to encrypt the transaction amount.

In some embodiments, in the transaction supervision apparatus based on the blockchain, the zero-knowledge proof is used to perform at least one of: verifying that the transaction amount is greater than or equal to 0 and an account balance at a payer address is greater than or equal to the transaction amount, based on the first amount encryption parameter, the second amount encryption parameter, and Pedersen commitment; verifying whether the payer address is correct based on a payer public key and a signed payer address in the KYC contract; verifying whether the payee location address is correct based on a payee public key and the signed payee address in the KYC contract; or verifying whether each of the one or more pieces of transaction-supervision ciphertext is a pieces of information signed by an associated supervision nodes of the one or more associated supervision nodes based on the first supervision public key, the second supervision public key, and the third supervision public key in the KYC contract.

In some embodiments, in the transaction supervision apparatus based on the blockchain, the encrypted payee address is obtained by encrypting the payee address based on an asymmetric key-pseudonym algorithm; the encrypted payer address is obtained by encrypting the payer address based on the asymmetric key-pseudonym algorithm.

FIG. 8 is a structural diagram of a transaction supervision apparatus based on a blockchain according to some embodiments of the present disclosure. Referring to FIG. 8, the transaction supervision apparatus 80 based on a blockchain is applied to each of one or more associated supervision nodes and includes: an obtaining unit 81 and a changing unit 82.

The obtaining unit 81 is configured to obtain a corresponding piece of transaction-supervision ciphertext via a predetermined communication channel, decrypt the corresponding piece transaction-supervision ciphertext based on a supervision private key of the associated supervision nodes to obtain to-be-supervised information; and in a case that the transaction plaintext in the to-be-supervised information is correct and complete, sign the transaction ciphertext based on the supervision private key to obtain a piece of signed ciphertext, determine a transaction state of the transaction plaintext as a first state, and send the piece of signed ciphertext to a payer client node via the predetermined communication channel; where the corresponding piece of transaction-supervision ciphertext is obtained by the payer client node encrypting the to-be-supervised information based on the supervision public key, the to-be-supervised information includes the transaction ciphertext and the transaction plaintext, and the transaction ciphertext is constructed based on the transaction plaintext.

The changing unit 82 is configured to change the transaction state of the transaction plaintext to a second state, in a case that the piece of signed ciphertext is detected to have been stored in the blockchain.

In some embodiments, in the transaction supervision apparatus based on the blockchain, the transaction plaintext includes payee identity information, a transaction amount, and payer identity information; and the transaction ciphertext includes an encrypted payer address, an encrypted payment amount, and an encrypted payee address, where the encrypted payment amount is obtained by encrypting the transaction amount based on a first amount encryption parameter and a second amount encryption parameter, the first amount encryption parameter being used by a payee client node to encrypt the transaction amount, and the second amount encryption parameter being used by the payer client node to encrypt the transaction amount.

In some embodiments, in the transaction supervision apparatus based on the blockchain, the one or more supervision public keys respectively corresponding to the one or more associated supervision nodes are stored in a KYC contract, and an element of a vector matrix in the KYC contract include a user-identity vector, a supervision-identity vector, and a public-key vector, where the user-identity vector stores the payee identity information and the payer identity information, the supervision-identity vector stores identity information of the one or more associated supervision nodes, and the public-key vector stores a payee public key, a payer public key, and the one or more supervision public keys.

In some embodiments, in the transaction supervision apparatus based on the blockchain, the one or more supervision public keys include a first supervision public key, a second supervision public key, and a third supervision public key, where an associated supervision node corresponding to the first supervision public key is configured to supervise a payer client, an associated supervision node corresponding to the second supervision public key is configured to supervise a payee client, and an associated supervision node corresponding to the third supervision public key is configured to supervise a type of digital currency that the transaction amount belongs.

In some embodiments, in the transaction supervision apparatus based on the blockchain, the predetermined communication channel is a communication channel established via a peer-to-peer (P2P) network.

In some embodiments of the present disclosure, in the transaction supervision apparatus based on the blockchain, the to-be-supervised information further includes a signed payer address obtained by signing the encrypted payer address based on a payer private key corresponding to the payer client node, a signed payee address obtained by signing the encrypted payee address based on a payee private key corresponding to the payee client node involved in the transaction, and a first amount encryption parameter.

The obtaining unit 81 is configured to sign, by each associated supervision node of the one or more associated supervision nodes, the transaction ciphertext based on the supervision private key to obtain the piece of signed ciphertext in a case that a predetermined condition is met and the transaction plaintext is correct and complete, where the predetermined condition includes: the signed payer address passing verification of the payer public key corresponding to the payer client node, the signed payee address passing verification of the payee public key corresponding to the payee client node, and the encrypted payment amount being obtained based on the first amount encryption parameter, the second amount encryption parameter and the transaction amount.

With regard to the apparatus in the embodiments described above, the manner in which the respective units perform operations has been described in detail in the embodiments related to the method, and will not be repeated herein.

FIG. 9 is an associated supervision node provided by some embodiments of the present disclosure. As shown in FIG. 9, the electronic device may include a processor 901, a memory 902 for storing instructions executable by the processor 901. The processor 901 is configured to execute the instructions to implement the transaction supervision method based on the blockchain according to the above embodiments.

In addition, the electronic device may further include a communication bus 903 and at least one communication interface 904.

The processor 901 may be a central processing unit (CPU), a microprocessing unit, an application specific integrated circuit (ASIC), or one or more integrated circuits for controlling execution of programs according to embodiments of the present disclosure.

The communication bus 903 is a signal path configured to communicate information between the modules described above.

The communication interface 904, using any device such as a transceiver, is configured to communicate with other devices or communications networks, such as Ethernet, radio access networks (RAN), wireless local area networks (WLAN), or the like.

The memory 902 may be a read-only memory (ROM) or other types of static storage devices that can store static information and instructions, a random access memory (RAM) or other types of dynamic storage devices that can store information and instructions, or may be an electrically erasable programmable read-only memory (EEPROM), a compact disc read-only memory (CD-ROM) or other optical disc storage, an optical disk storage (including a compression optical disc, a laser disc, an optical disc, a digital versatile disc, a blue-ray disc, or the like), a magnetic disk storage medium or other magnetic storage device, or any other medium that can carry or store expected program code in a form of instructions or data structures and can be accessed by a computer, which is not limited herein. The memory 902 may be independent and connected to the processor 901 via the communication bus 903. The memory 902 may also be integrated with the processor 901.

The memory 902 is configured to store instructions for executing embodiments of the present disclosure, and the execution is controlled by the processor 901. The processor 901 is configured to execute programs or instructions stored in the memory 902, thereby implementing functions in embodiments of the present disclosure.

As an example, referring to FIG. 7, the transaction supervision apparatus based on the blockchain is applied to a payer client node and includes: a first processing unit 71, a second processing unit 72, and a sending unit 73. And the transaction supervision apparatus implements the same function as the processor 901 in FIG. 9.

As an example, referring to FIG. 8, the transaction supervision apparatus based on the blockchain is applied to an associated supervision node and includes: an obtaining unit 81 and a changing unit 82. And the transaction supervision apparatus implements the same function as the processor 901 in FIG. 9.

In some embodiments, the processor 901 may include one or more CPUs, such as CPU0 and CPU1 in FIG. 9.

In some embodiments, the electronic device may include multiple processors 901, each of the multiple processors 901 may be a single-CPU processor or a multi-CPU processor. The processor 901 herein may refer to one or more devices, circuits, and/or processing cores for processing data(for example, computer program instructions).

In some embodiments, the electronic device may further include an output device 905 and an input device 906. The output device 905 communicates with the processor 901 and may display information in a variety of ways. For example, the output device 905 may be a liquid crystal display (LCD), a light emitting diode (LED) display device, a cathode ray tube (CRT) display device, a projector, or the like. The input device 906 communicates with the processor 901 and may accept user input in a variety of ways. For example, the input device 906 may be a mouse, a keyboard, a touch screen device, a sensing device, or the like.

Those skilled in the art will understand that the structure shown in FIG. 9 does not constitute a limitation of the electronic device, and may include more or fewer modules than shown, or combine certain modules, or employ different arrangements of modules. The electronic device in FIG. 9 may be a server, a client or other devices.

In addition, a computer-readable storage medium (for example, a non-transitory computer-readable storage medium) storing programs or instructions is provided according to some embodiments of the present disclosure, and when the instructions in the readable storage medium are executed by a processor, the electronic device can perform the transaction supervision method based on the blockchain as provided in the above embodiments. For example, the computer-readable storage medium may be a ROM, a random access memory (RAM), a CD-ROM, a magnetic tape, a floppy disk, or an optical data storage device.

In addition, a computer program product including a computer program or instructions is further provided according to some embodiments of the present disclosure, the computer program product is stored in a non-volatile readable storage medium, and the computer program product, when executed by at least one processor, causes an electronic device to perform the transaction supervision method based on the blockchain as provided in the above embodiments.

Other embodiments of the present disclosure will be apparent to those skilled in the art from consideration of the specification and practice of the disclosure here. The present disclosure is intended to cover any variation, application, or adapted modification of the present disclosure. Such variation, application, or adapted modification follow the general principles of the present disclosure and include common knowledge or common technical means in the art which are not disclosed in the present disclosure. The description and the embodiments are only illustrative, and the actual scope and spirit of the present disclosure are defined by the claims.

It should be noted that the present disclosure is not limited to the precise structure described above and shown in the drawings. Various modifications and changes may be made without departing from the scope of the present disclosure. The scope of the present disclosure is limited by only the claims.

**Claims**

1. A transaction supervision method based on a blockchain, comprising:

   obtaining, by a payer client node, transaction plaintext of a transaction and constructing transaction ciphertext based on the transaction plaintext, wherein the transaction involves one or more associated supervision nodes;
   by the payer client node, encrypting to-be-supervised information respectively based on one or more supervision public keys respectively corresponding to the one or more associated supervision nodes to obtain one or more pieces of transaction-supervision ciphertext, and sending the one or more pieces of transaction-supervision ciphertext to the one or more associated supervision nodes respectively via a predetermined communication channel, wherein the to-be-supervised information comprises the transaction ciphertext and the transaction plaintext;
   by each associated supervision node of the one or more associated supervision nodes, obtaining a corresponding piece of transaction-supervision ciphertext, decrypting the corresponding piece of transaction-supervision ciphertext based on a supervision private key to obtain the to-be-supervised information, and in a case that the transaction plaintext is correct and complete, signing the transaction ciphertext based on the supervision private key to obtain a piece of signed ciphertext, determining a transaction state of the transaction plaintext as a first state, and sending the piece of signed ciphertext to the payer client node via the predetermined communication channel;

by the payer client node, sending, in a case that one or more pieces of signed ciphertext respectively sent by the one or more associated supervision nodes are received, the one or more pieces of signed ciphertext and a zero-knowledge proof to the blockchain, wherein the zero-knowledge proof is used for verifying whether each piece of transaction-supervision ciphertext corresponding to a piece of signed ciphertext is correct and complete;

storing, by a blockchain verification node, the one or more pieces of signed ciphertext on the blockchain, in a case that the zero-knowledge proof is valid; and

by each associated supervision node of the one or more associated supervision nodes, changing the transaction state of the transaction plaintext to a second state in a case that a corresponding piece of signed ciphertext is detected to have been stored in the blockchain.

2. The transaction supervision method according to claim 1, wherein the transaction plaintext comprises payee identity information, a transaction amount, and payer identity information; and the transaction ciphertext comprises an encrypted payer address, an encrypted payment amount, and an encrypted payee address, wherein the encrypted payment amount is obtained by encrypting the transaction amount based on a first amount encryption parameter and a second amount encryption parameter, the first amount encryption parameter being used by a payee client node to encrypt the transaction amount, and the second amount encryption parameter being used by the payer client node to encrypt the transaction amount.

3. The transaction supervision method according to claim 1 or 2, wherein the one or more supervision public keys respectively corresponding to the one or more associated supervision nodes are stored in a know your customer (KYC) contract, and an element of a vector matrix in the KYC contract comprise a user-identity vector, a supervision-identity vector, and a public-key vector, wherein the user-identity vector stores the payee identity information and the payer identity information, the supervision-identity vector stores identity information of the one or more associated supervision nodes, and the public-key vector stores a payee public key, a payer public key, and the one or more supervision public keys.

4. The transaction supervision method according to any one of claims 1 to 3, wherein the one or more supervision public keys comprise a first supervision public key, a second supervision public key, and a third supervision public key, wherein an associated supervision node corresponding to the first supervision public key has an authority to supervise a payer client among the supervised objects related to the transaction, an associated supervision node corresponding to the second supervision public key has an authority to supervise a payee client among the supervised objects related to the transaction, and an associated supervision node corresponding to the third supervision public key has an authority to supervise a type of digital currency that the transaction amount belongs among the supervised objects related to the transaction.

5. The transaction supervision method according to any one of claims 1 to 4, wherein the predetermined communication channel is a communication channel established through a peer-to-peer (P2P) network.

6. The transaction supervision method according to any one of claims 1 to 5, wherein the to-be-supervised information further comprises a signed payer address obtained by signing the encrypted payer address based on a payer private key corresponding to the payer client node, a signed payee address obtained by signing the encrypted payee address based on a payee private key corresponding to the payee client node involved in the transaction, and a first amount encryption parameter;

the in a case that the transaction plaintext is correct and complete, signing the transaction ciphertext based on the supervision private key to obtain a piece of signed ciphertext by each associated supervision node of the one or more associated supervision nodes, comprising:

by each associated supervision node of the one or more associated supervision nodes, signing the transaction ciphertext based on the supervision private key to obtain the piece of signed ciphertext in a case that a predetermined condition is met and the transaction plaintext is correct and complete, wherein the predetermined condition comprises: the signed payer address passing verification of the payer public key corresponding to the payer client node, the signed payee address passing verification of the payee public key corresponding to the payee client node, and the encrypted payment amount being obtained based on the first amount encryption parameter, the second amount encryption parameter and the transaction amount.

7. The transaction supervision method according to any one of claims 1 to 6, further comprising:

receiving, by the payer client node, a first amount encryption parameter sent by a payee client node; and encrypting, by the payer client node, the transaction amount based on Pedersen commitment and using the first amount encryption parameter and a second amount encryption parameter as a confusion factor respectively, to obtain the encrypted payment amount.

8. The transaction supervision method according to any one of claims 1 to 7, wherein the zero-knowledge proof is used to perform at least one of:

verifying that the transaction amount is greater than or equal to 0 and an account balance at a payer address is greater than or equal to the transaction amount, based on the first amount encryption parameter, the second amount encryption parameter, and Pedersen commitment;
verifying whether payer location information is correct based on a payer public key and a signed payer address in the KYC contract;
verifying whether payee location information is correct based on a payee public key and the signed payee address in the KYC contract; or
verifying whether to-be-supervised information corresponding to each piece of transaction-supervision ciphertext of the one or more pieces of transaction-supervision ciphertext is the same, based on the first supervision public key, the second supervision public key, and the third supervision public key in the KYC contract; wherein the payer location information refers to location information of the payer public key corresponding to the payer client node in the KYC contract;
the payee location information refers to location information of the payee public key corresponding to the payee client node in the KYC contract, and the payee client node is a client node corresponding to a payee of the transaction;
the first supervision public key is a supervision public key corresponding to the payer location information in the KYC contract;
the second supervision public key is a supervision public key corresponding to the payee location information in the KYC contract; and
the third supervision public key is a supervision public key corresponding to a digital-currency contract-address location information in the KYC contract.

9. The transaction supervision method according to any one of claims 1 to 8, wherein the encrypted payee address is obtained by encrypting the payee address based on an asymmetric key-pseudonym algorithm; the encrypted payer address is obtained by encrypting the payer address based on the asymmetric key-pseudonym algorithm.

10. A transaction supervision method based on a blockchain, wherein the transaction supervision method is applied to a payer client node and comprises:

obtaining transaction plaintext of a transaction;
constructing transaction ciphertext based on the transaction plaintext, wherein the transaction involves one or more associated supervision nodes;
encrypting to-be-supervised information respectively based on one or more supervision public keys respectively corresponding to the one or more associated supervision nodes to obtain one or more pieces of transaction-supervision ciphertext, and sending the one or more pieces of transaction- supervision ciphertext to the one or more associated supervision nodes respectively via a predetermined communication channel, wherein the to-be-supervised information comprises the transaction ciphertext and the transaction plaintext; and
sending, in a case that one or more pieces of signed ciphertext respectively sent by the one or more associated supervision nodes are received, the one or more signed ciphertext and a zero-knowledge proof to the blockchain, wherein the zero-knowledge proof is used to verify whether each piece of transaction-supervision ciphertext corresponding to a piece of signed ciphertext is correct and complete.

11. A transaction supervision method based on a blockchain, wherein the transaction supervision method is applied to each of one or more associated supervision nodes and comprises:

obtaining a corresponding piece of transaction-supervision ciphertext via a predetermined communication channel, decrypting the corresponding piece transaction-supervision ciphertext based on a supervision private key of the associated supervision nodes to obtain to-be-supervised information;
in a case that the transaction plaintext in the to-be-supervised information is correct and complete, signing the transaction ciphertext based on the supervision private key to obtain a piece of signed ciphertext, determining a transaction state of the transaction plaintext as a first state, and sending the piece of signed ciphertext to a payer client node via the predetermined communication channel; wherein the corresponding piece of transaction-supervision ciphertext is obtained by the payer client node encrypting the to-be-supervised information based on the supervision public key, the to-be-supervised information comprises the transaction ciphertext and the transaction plaintext, and the transaction ciphertext is constructed based on the transaction plaintext; and changing the transaction state of the transaction plaintext to a second state, in a case that the piece of signed ciphertext is detected to have been stored in the blockchain.

12. A transaction supervision system based on a blockchain, comprising: a payer client node, a blockchain verification node and one or more associated supervision nodes; wherein

the payer client node is configured to obtain transaction plaintext of a transaction and transaction ciphertext based on the transaction plaintext, wherein the transaction involves the one or more associated supervision nodes; encrypt to-be-supervised information respectively based on one or more supervision public keys respectively corresponding to the one or more associated supervision nodes to obtain one or more pieces of transaction-supervision ciphertext, and send the one or more pieces of transaction- supervision ciphertext to the one or more associated supervision nodes respectively via a predetermined communication channel, wherein the to-be-supervised information comprises the transaction ciphertext and the transaction plaintext;
each associated supervision node is configured to obtain a corresponding piece of transaction-supervision ciphertext via the predetermined communication channel, decrypt the corresponding piece transaction-supervision ciphertext based on a supervision private key of the associated supervision nodes to obtain to-be-supervised information, and in a case that the transaction plaintext in the to-be-supervised information is correct and complete, sign the transaction ciphertext based on the supervision private key to obtain a piece of signed ciphertext, determine a transaction state of the transaction plaintext as a first state, and send the piece of signed ciphertext to the payer client node via the predetermined communication channel;
the payer client node is configured to send, in a case that one or more pieces of signed ciphertext respectively sent by the one or more associated supervision nodes are received, the one or more pieces of signed ciphertext and a zero-knowledge proof to the blockchain, wherein the zero-knowledge proof is used for verifying whether each piece of transaction-supervision ciphertext corresponding to a piece of signed ciphertext is correct and complete;
the blockchain verification node is configured to store the one or more pieces of signed ciphertext on the blockchain, in a case that the zero-knowledge proof is valid; and
each associated supervision node is configured to change the transaction state of the transaction plaintext to a second state, in a case that a piece of signed ciphertext corresponding to the associated supervision node is detected to have been stored in the blockchain.

13. A transaction supervision apparatus based on a blockchain, applied to a payer client node, wherein the transaction supervision apparatus comprises: a first processing unit, a second processing unit, and a sending unit; wherein

the first processing unit is configured to obtain transaction plaintext of a transaction and construct transaction ciphertext based on the transaction plaintext, wherein the transaction involves one or more associated supervision nodes;
the second processing unit is configured to encrypt to-be-supervised information respectively based on one or more supervision public keys respectively corresponding to the one or more associated supervision nodes to obtain one or more pieces of transaction-supervision ciphertext, and send the one or more pieces of transaction-supervision ciphertext to the one or more associated supervision nodes respectively via a predetermined communication channel, wherein the to-be-supervised information comprises the transaction ciphertext and the transaction plaintext; and
the sending unit is configured to send, in a case that one or more pieces of signed ciphertext respectively sent by the one or more associated supervision nodes are received, the one or more signed ciphertext and a zero-knowledge proof to the blockchain, wherein the zero-knowledge proof is used to verify whether each piece of transaction-supervision ciphertext corresponding to a piece of signed ciphertext is correct and complete.

14. A transaction supervision apparatus based on a blockchain, wherein the transaction supervision apparatus is applied to each of one or more associated supervision nodes and comprises: an obtaining unit and a changing unit; wherein

the obtaining unit is configured to obtain a corresponding piece of transaction-supervision ciphertext via a predetermined communication channel, decrypt the corresponding piece transaction-supervision ciphertext based on a supervision private key of the associated supervision nodes to obtain to-be-supervised information;

and in a case that the transaction plaintext in the to-be-supervised information is correct and complete, sign the transaction ciphertext based on the supervision private key to obtain a piece of signed ciphertext, determine a transaction state of the transaction plaintext as a first state, and send the piece of signed ciphertext to a payer client node via the predetermined communication channel; wherein the corresponding piece of transaction-supervision ciphertext is obtained by the payer client node encrypting the to-be-supervised information based on the supervision public key, the to-be-supervised information comprises the transaction ciphertext and the transaction plaintext, and the transaction ciphertext is constructed based on the transaction plaintext; and
the changing unit is configured to change the transaction state of the transaction plaintext to a second state, in a case that the piece of signed ciphertext is detected to have been stored in the blockchain.

15. An electronic device, comprising:

   a processor; and
   a memory, configured to store instructions executable by the processor; wherein
   the processor is configured to execute the instructions to implement the transaction supervision method based on the blockchain according to claim 10 or 11.

16. A computer-readable storage medium, wherein computer-executable instructions in the computer-readable storage medium, when executed by a processor, implement the transaction supervision method based on the blockchain according to claim 10 or 11.

**FIG. 1**

---

a payer client node obtains transaction plaintext of a transaction and constructs transaction ciphertext based on the transaction plaintext — 201

the payer client node encrypts to-be-supervised information based on one or more supervision public keys respectively corresponding to the one or more associated supervision nodes respectively to obtain one or more pieces of transaction-supervision ciphertext, and the payer client node sends the one or more pieces of transaction-supervision ciphertext to the one or more associated supervision nodes respectively via a predetermined communication channel — 202

each associated supervision node of the one or more associated supervision nodes obtains a corresponding piece of transaction-supervision ciphertext, decrypts the corresponding piece of transaction-supervision ciphertext based on a supervision private key to obtain the to-be-supervised information, and in a case that the transaction plaintext is correct and complete, signs the transaction ciphertext based on the supervision private key to obtain a piece of signed ciphertext, determines a transaction state of the transaction plaintext as a first state, and sends the piece of signed ciphertext to the payer client node via the predetermined communication channel — 203

in a case that one or more pieces of signed ciphertext respectively sent by the one or more associated supervision nodes are received, the payer client node sends the one or more pieces of signed ciphertext and a zero-knowledge proof to the blockchain — 204

the blockchain verification node stores the one or more pieces of signed ciphertext on the blockchain, in a case that the zero-knowledge proof is valid — 205

each associated supervision node of the one or more associated supervision nodes changes the transaction state of the transaction plaintext to a second state in a case that a corresponding piece of signed ciphertext is detected to have been stored in the blockchain — 206

**FIG. 2**

the payer client node retrieves the first supervision public key, the second supervision public key, and the third supervision public key in the KYC contract — 301

the payer client node encrypts the to-be-supervised information based on the first supervision public key, the second supervision public key and the third supervision public key, respectively, to obtain the one or more pieces of transaction-supervision ciphertext — 302

**FIG. 3**

the payer client node retrieves the first supervision public key, the second supervision public key, and the third supervision public key in the KYC contract — 301

the payer client node encrypts the to-be-supervised information based on the first supervision public key, the second supervision public key and the third supervision public key, respectively, to obtain the one or more pieces of transaction-supervision ciphertext — 302

the payer client node sends each piece of the one or more pieces of transaction-supervision ciphertext to a supervision node in the peer-to-peer (P2P) network via the predetermined communication channel, to broadcast each piece of transaction-supervision ciphertext to the one or more associated transaction supervision nodes in the P2P network by this supervision node — 401

**FIG. 4**

stores x units of digital currency T at $address_1$

A

100 units of digital currency T

B

constructs transaction ciphertext

verifies the transaction and generates signed transaction ciphertext

associated supervision node

store the transaction ciphertext related to the transaction on the blockchain after confirming the transaction

Blockchain network

**FIG. 5**

Transaction supervision system 60 based on a blockchain

payee client node — 61

associated supervision nodes — 62

blockchain verification node — 63

**FIG. 6**

Transaction supervision apparatus 70 based on a blockchain

first processing unit — 71

second processing unit — 72

sending unit — 73

**FIG. 7**

Transaction supervision apparatus 80 based on a blockchain

obtaining unit — 81

changing unit — 82

**FIG. 8**

901

processor
CPU0
CPU1

processor
CPU0
CPU1

902

903

memory

904
communication interface

905
output device

906
input device

**FIG. 9**

## INTERNATIONAL SEARCH REPORT

| International application No. |
| --- |
| **PCT/CN2023/138877** |

| A. | CLASSIFICATION OF SUBJECT MATTER |
| --- | --- |

G06Q 40/04(2012.01)i; G06F 21/64(2013.01)i; G06F 21/62(2013.01)i; G06Q 20/38(2012.01)i

According to International Patent Classification (IPC) or to both national classification and IPC

| B. | FIELDS SEARCHED |
| --- | --- |

Minimum documentation searched (classification system followed by classification symbols)

IPC: G06Q, G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 区块链, 付款方, 支付方, 买方, 监督, 监管, 节点, 加密, 签名, 验证, 零知识证明, 佩德森承诺, 公钥, 私钥, blockchain, payer, buyer, supervisory, node, encryption, sign, verification, zero knowledge proof, pearson's promise, public key, private key

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115908001 A (DIGITAL CURRENCY INSTITUTE OF THE PEOPLE'S BANK OF CHINA) 04 April 2023 (2023-04-04)<br>claims 1-16 | 1-16 |
| X | CN 113159767 A (CHINA CONSTRUCTION BANK CORP.) 23 July 2021 (2021-07-23)<br>abstract, description, paragraphs 25-28, 43-103, and 123-124, and figures 1-4 and 7 | 1-16 |
| A | CN 108764874 A (SHENZHEN QIANHAI WEBANK CO., LTD.) 06 November 2018 (2018-11-06)<br>entire document | 1-16 |
| A | CN 113988863 A (ZHEJIANG UNIVERSITY et al.) 28 January 2022 (2022-01-28)<br>entire document | 1-16 |
| A | CN 114358763 A (WUFU (SHANGHAI) DATA TECHNOLOGY CO., LTD.) 15 April 2022 (2022-04-15)<br>entire document | 1-16 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 February 2024** | **27 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/138877** |

### C. DOCUMENTS CONSIDERED TO BE RELEVANT

| Category* | Citation of document, with indication, where appropriate, of the relevant passages | Relevant to claim No. |
| --- | --- | --- |
| A | CN 114580029 A (ZHEJIANG ORACLE SUPER CODE TECHNOLOGY CO., LTD.) 03 June 2022 (2022-06-03) entire document | 1-16 |
| A | WO 2021144888 A1 (FINALITY TECHNOLOGIES INC.) 22 July 2021 (2021-07-22) entire document | 1-16 |

Form PCT/ISA/210 (second sheet) (July 2022)

**INTERNATIONAL SEARCH REPORT**
Information on patent family members

International application No.

**PCT/CN2023/138877**

| Patent document cited in search report | | | Publication date (day/month/year) | Patent family member(s) | Publication date (day/month/year) |
|---|---|---|---|---|---|
| CN | 115908001 | A | 04 April 2023 | None | |
| CN | 113159767 | A | 23 July 2021 | None | |
| CN | 108764874 | A | 06 November 2018 | None | |
| CN | 113988863 | A | 28 January 2022 | None | |
| CN | 114358763 | A | 15 April 2022 | None | |
| CN | 114580029 | A | 03 June 2022 | None | |
| WO | 2021144888 | A1 | 22 July 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211701349